# EUROPÄISCHE PATENTSCHRIFT

(11) **EP 2 886 992 B1**
(45) Veröffentlichungstag und Bekanntmachung des Hinweises auf die Patenterteilung: **25.05.2016**
(21) Anmeldenummer: 13198698.6
(22) Anmeldetag: 20.12.2013
(51) Int. Cl.: F28D 9/00, B01D 1/22, F25B 39/02

(54) **Plattenwärmeübertrager**
Plate-type heat exchanger
Échangeur de chaleur à plaques

(43) Veröffentlichungstag der Anmeldung: 24.06.2015
(73) Patentinhaber: Viessmann Werke GmbH & Co. Kg, 35108 Allendorf (DE)
(72) Erfinder: Chatzitakis, Paris, 35099 Burgwald-Bottendorf (DE); Dawoud, Belal, 59955 Winterberg (DE); Hertwig, Jan, 35236 Breidenbach (DE); Kleem, Peter, 35066 Frankenberg (DE); Vedder, Ulrich, 35066 Frankenberg (DE); Anderssen, Sven, 28137 Hässleholm (SE); Dahlberg, Tomas, 25450 Helsingborg (SE)
(74) Vertreter: Wolf, Michael

(56) Entgegenhaltungen:
- WO-A1-03/010482
- WO-A1-2006/073346
- WO-A2-2009/119695
- GB-A- 2 089 226

## Beschreibung

Die Erfindung betrifft einen Plattenwärmeübertrager gemäß dem Oberbegriff des Patentanspruchs 1. Solch ein Plattenwärmeübertragen ist aus GB 2089226 bekannt.

Ein Plattenwärmeübertrager der eingangs genannten Art ist nach DE 20 2008 004 582 U1 bekannt. Dieser besteht aus einer Anzahl stapelartig angeordneter, miteinander typischer Weise durch Löten verbundener und wellenförmig profilierter Wärmetauscherplatten. Zwischen diesen Wärmetauscherplatten sind voneinander getrennte, parallel zueinander verlaufende erste und zweite Strömungskanalgruppen für eine erstes und zweites Fluid angeordnet. Dabei ist für das erste Fluid ein erster Zufuhranschluss zur ersten Strömungskanalgruppe und ein erster Abfuhranschluss von der ersten Strömungskanalgruppe und für das zweite Fluid ein zweiter Zufuhranschluss zur zweiten Strömungskanalgruppe und ein zweiter Abfuhranschluss von der zweiten Strömungskanalgruppe vorgesehen.

Die Funktionsweise derartiger Plattenwärmeübertrager ist allgemein bekannt. Sie zeichnen sich insbesondere durch ihre kompakte Baugröße und eine bezogen auf ihre Größe sehr hohe Wärmestromdichte aus.

Der Erfindung liegt die Aufgabe zugrunde, einen Plattenwärmeübertrager der eingangs genannten Art einem weiteren Anwendungsgebiet bzw. Anwendungszweck zugänglich zu machen.

Diese Aufgabe ist mit einem Plattenwärmeübertrager der eingangs genannten Art durch die im Kennzeichen des Patentanspruchs 1 aufgeführten Merkmale gelöst.

Nach der Erfindung ist also vorgesehen, dass die zweite Strömungskanalgruppe mit einem Dampfanschluss versehen und in die gleiche Strömungskanalgruppe ein mit dem Abfuhranschluss der gleichen Strömungskanalgruppe verbundener Berieselungsanschluss ausmündend ausgebildet ist.

Mit anderen Worten zeichnet sich die erfindungsgemäße Lösung dadurch aus, dass der Plattenwärmeübertrager mit einer internen, zwischen den Wärmetauscherplatten angeordneten (unten noch genauer erläuterten) Berieselungseinheit versehen ist, mit der wahlweise das über den Berieselungsanschluss zugeführte Fluid zumindest teilweise verdampft wird oder die dazu dient, das über den Berieselungsanschluss zugeführten Fluid mit einem Dampf in engen stofflichen Kontakt zu bringen. Der beanspruchte Dampfanschluss dient somit entweder dazu, das verdampfte Fluid abzuführen oder einen Dampf in die zweite Strömungskanalgruppe einzubringen.

Die genannte Berieselungseinheit zeichnet sich dabei dadurch aus, dass das über den Berieselungsanschluss zugeführte Fluid in Form eines dünnen Films über die wellenförmig profilierten Wärmetauscherplatten geleitet wird und dabei wahlweise verdampft oder sich mit dem zugeführten Dampf verbindet.

Noch etwas konkreter betrachtet, ist besonders bevorzugt vorgesehen, dass der Plattenwärmeübertrager wahlweise als Verdampfer oder als Absorber ausgebildet ist:
Im ersten Fall wird der Plattenwärmeübertrager bevorzugt von zwei Fluiden durchströmt, nämlich einerseits zum Beispiel einer mit Umgebungserwärme erwärmten Sole (erstes Fluid) und andererseits einem Kältemittel (zweites Fluid). Dabei wird das Kältemittel über den zweiten Abfuhranschluss flüssig aus dem Plattenwärmeübertrager abgeführt und diesem über den Berieselungsanschluss wieder zugeführt. Die erfindungsgemäße Berieselung bzw. Berieselungseinheit führt dabei dazu, dass das Kältemittel zumindest teilweise verdampft und über den Dampfanschluss zu einer weiteren Verwendung abgeführt werden kann. In diesem Fall wird also Wärme von der Sole auf das Kältemittel übertragen.

Im zweiten Fall wird der Plattenwärmeübertrager bevorzugt einerseits zum Beispiel von einem Heizkreismedium (erstes Fluid) und andererseits von einem flüssigen Sorptionsmittel (zweites Fluid) durchströmt. Dabei wird das Sorptionsmittel, das in diesem Fall mit einem weiteren Fluid, nämlich einem Kältemittel, vermischt ist, über den zweiten Abfuhranschluss aus dem Plattenwärmeübertrager abgeführt und diesem über den Berieselungsanschluss wieder zugeführt. Die erfindungsgemäße Berieselung bzw. Berieselungseinheit führt dazu, dass sich das flüssige Sorptionsmittel mit einem über den Dampfanschluss zugeführten dampfförmigen Kältemittel unter Wärmefreisetzung verbinden kann. In diesem Fall wird also Wärme vom Sorptionsmittel auf das Heizkreismedium übertragen.

Schließlich ist erfindungsgemäß sogar vorgesehen, dass ein erster erfindungsgemäßer Plattenwärmeübertrager als Verdampfer und ein zweiter erfindungsgemäßer Plattenwärmeübertrager als Absorber ausgebildet ist, wobei die beiden Plattenwärmeübertrager über den Dampfanschluss miteinander verbunden ausgebildet sind. Auf diese Weise lässt sich, was weiter unten noch genauer erläutert wird, eine besonders kompakte Bauform einer Verdampfer/Absorber-Kombination, wie sie zum Beispiel aus der WO 2009/119695 A2 bekannt ist, realisieren.

Andere vorteilhafte Weiterbildungen des erfindungsgemäßen Plattenwärmeübertragers ergeben sich aus den abhängigen Patentansprüchen.

Der erfindungsgemäße Plattenwärmeübertrager einschließlich seiner vorteilhaften Weiterbildungen gemäß der abhängigen Patentansprüche wird nachfolgend anhand der zeichnerischen Darstellung verschiedener Ausführungsbeispiele näher erläutert.

Es zeigt
- Figur 1: auf der linken Seite perspektivisch eine Reihe von miteinander verbundenen Wärmetauscherplatten und auf der rechten Seite den gleichen Stapel an Wärmetauscherplatten im Schnitt;
- Figur 2: perspektivisch zwei Grundformen von Wärmetauscherplatten (ohne Abkantungen), die bei verlötetem Plattenwärmeübertrager plan aufeinander liegen;
- Figur 3: auf der linken Seite perspektivisch einen Stapel von insgesamt sechs Wärmetauscherplatten, wobei stets zwei Platten plan miteinander verlötet sind und die erste Strömungskanalgruppe zwischen sich einschließen, während jeweils zwischen diesen Zweiergruppen über Prägungen ein Abstand für die zweite Strömungskanalgruppe definiert ist; auf der rechten Seite perspektivisch einen Stapel von Wärmetauscherplatten mit Abkantungen und einer Abschlussplatte mit Zu- und Abfuhranschlüssen;
- Figur 4: perspektivisch zwei in Bezug auf Figur 2 andere Grundformen von Wärmetauscherplatten (ohne Abkantungen);
- Figur 5: die gleiche Konstellation wie in Figur 3, allerdings mit den Wärmetauscherplatten gemäß Figur 4;
- Figur 6: schematisch ein Konzept einer möglichen Verschaltung zweiter Plattenwärmeübertrager, wobei der Plattenwärmeübertrager auf der linken Seite als Verdampfer und auf der rechten Seite als Absorber ausgebildet ist.

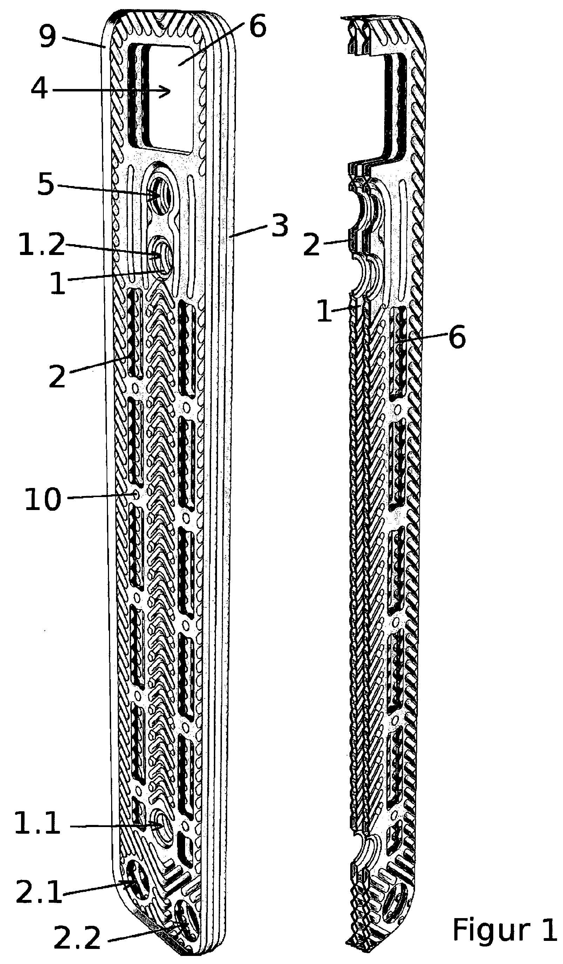

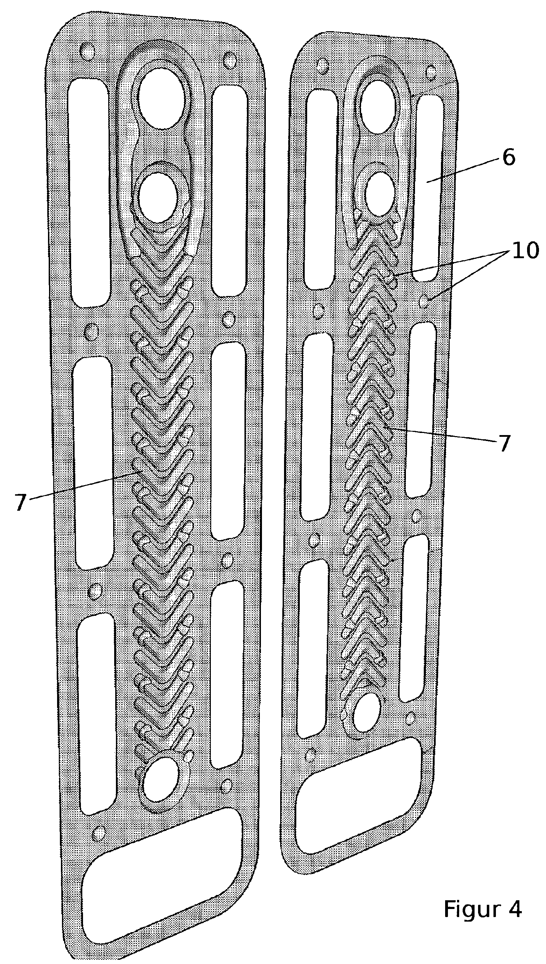

Die in den Figuren 1 bis 6 dargestellten Plattenwärmeübertrager bestehen aus einer Anzahl stapelartig angeordneter, miteinander verbundener und wellenförmig profilierter Wärmetauscherplatten 3, zwischen denen fluidisch voneinander getrennte, parallel zueinander verlaufende erste und zweite Strömungskanalgruppen 1, 2 für ein erstes und ein zweites wärmetauschendes Fluid angeordnet sind, wobei für das erste Fluid ein erster Zufuhranschluss 1.1 zur ersten Strömungskanalgruppe 1 und ein erster Abfuhranschluss 1.2 von der ersten Strömungskanalgruppe 1 und für das zweite Fluid ein zweiter Zufuhranschluss 2.1 zur zweiten Strömungskanalgruppe 2 und ein zweiter Abfuhranschluss 2.2 von der zweiten Strömungskanalgruppe 2 vorgesehen ist.

weiterhin ist in an sich bekannter Weise vorgesehen, dass die Wärmetauscherplatten 3 eine rechteckige Grundform vorzugsweise mit abgerundeten Ecken aufweisen. Dabei sind alle Rändern 9 der Wärmetauscherplatten 3 abgekantet ausgebildet, wobei außerdem die abgekanteten Ränder 9 der ineinander gestapelten und vorzugsweise miteinander verlöteten Wärmetauscherplatten 3 eine randseitige Abdichtung des Plattenwärmeübertragers bilden.

Wesentlich für alle Ausführungsformen des erfindungsgemäßen Plattenwärmeübertragers ist nun, dass die zweite Strömungskanalgruppe 2 mit einem Dampfanschluss 4 versehen und in die gleiche Strömungskanalgruppe 2 ein mit dem Abfuhranschluss 2.2 der gleichen Strömungskanalgruppe 2 verbundener Berieselungsanschluss 5 ausmündend ausgebildet ist.

In dieser Weise ausgebildet, kann der erfindungsgemäße Plattenwärmeübertrager als Verdampfer verwendet werden. In diesem Fall ist vorgesehen, dass die zweite Strömungskanalgruppe 2 zur Verdampfung des über den Berieselungsanschluss 5 zugeführten zweiten Fluids und der Dampfanschluss 4 zur Abfuhr des verdampften zweiten Fluids aus der zweiten Strömungskanalgruppe 2 ausgebildet ist. Dabei ist das erste Fluid bevorzugt eine mit Umgebungswärme, insbesondere Erdwärme, erwärmte Sole und das zweite Fluid ein verdampfbares Kältemittel, und zwar insbesondere Ammoniak, wobei weiterhin die erste Strömungskanalgruppe 1 zur Übertragung von Wärme vom ersten Fluid (der Sole) auf das zweite, in der zweiten Strömungskanalgruppe 2 befindliche Fluid (das Kältemittel) ausgebildet ist.

Kurz zusammengefasst, strömt somit die erwärmte Sole (erstes Fluid) über den ersten Zufuhranschluss 1.1 in die erste Strömungskanalgruppe 1, gibt ihre Wärme auf dem Weg zum Abfuhranschluss 1.2 an die Wärmetauscherplatten 3 ab und verlässt die erste Strömungskanalgruppe 1 über den Abfuhranschluss 1.2. Das Kältemittel (zweites Fluid) wird über den Zufuhranschluss 2.1 zugeführt. Gleichzeitig wird über den Abfuhranschluss 2.2 flüssiges Kältemittel aus der Strömungskanalgruppe 2 abgeführt und dem Berieselungsanschluss 5 zugeführt. Von dort rieselt das flüssige Kältemittel über die von der Sole erwärmten Wärmetauscherplatten 3 und verdampft dabei mindestens teilweise, wobei der verdampfte Teil des Kältemittels die Strömungskanalgruppe 2 über den Dampfanschluss 4 verlässt und der nicht verdampfte Teil des Kältemittels wieder über den Abfuhranschluss 2.2 dem Berieselungsanschluss 5 zugeführt wird.

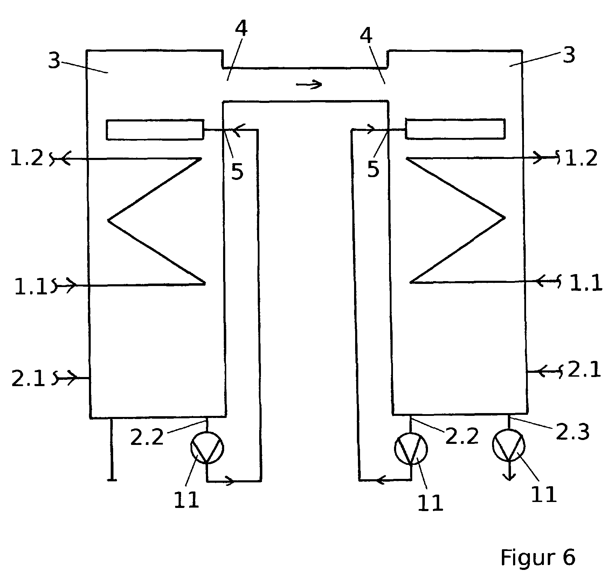

Alternativ kann der erfindungsgemäße Plattenwärmeübertrager aber auch als Absorber ausgebildet sein. In diesem Fall ist vorgesehen, dass der Dampfanschluss 4 zur Zufuhr eines dritten dampfförmigen Fluids (insbesondere eines dampfförmigen Kältemittels, insbesondere zum Beispiel Ammoniakdampf) zur zweiten Strömungskanalgruppe 2 und die zweite Strömungskanalgruppe 2 als Absorber zur Zusammenführung des über den Berieselungsanschluss 5 zugeführten zweiten Fluids mit dem dritten dampfförmigen Fluid ausgebildet ist. Dabei ist das erste Fluid Heizkreiswasser eines Gebäudeheizkreislaufes und das zweite Fluid ein fluides Sorptionsmittel, wie zum Beispiel Wasser. Weiterhin ist bei dieser Alternative, was noch genauer erläutert wird, vorgesehen, dass der Zufuhranschluss 2.1 zur Zufuhr von kältmittelarmen Sorptionsmittel ausgebildet und an der zweiten Strömungskanalgruppe 2 ein dritter Abfuhranschluss 2.3 (siehe hierzu Figur 6) zur Abfuhr eines kältemittelreichen Sorptionsmittels angeordnet ist. Die zweite Strömungskanalgruppe 2 ist außerdem zur Übertragung von Wärme vom zweiten Fluid auf das erste, in der ersten Strömungskanalgruppe 1 befindliche Fluid ausgebildet.

Kurz zusammengefasst, strömt somit das Heizkreiswasser (erstes Fluid) über den ersten Zufuhranschluss 1.1 in die erste Strömungskanalgruppe 1, nimmt wärme, deren Ursprung nachfolgend noch genauer erläutert wird, auf dem Weg zum Abfuhranschluss 1.2 an den Wärmetauscherplatten 3 auf und verlässt die erste Strömungskanalgruppe 1 über den Abfuhranschluss 1.2. Weiterhin wird über den Zufuhranschluss 2.1 das an dieser Stelle kältemittelarme Sorptionsmittel (zweites Fluid) zugeführt. Gleichzeitig wird über den Abfuhranschluss 2.2 Sorptionsmittel ab- und dem Berieselungsanschluss 5 zugeführt. Dort angekommen absorbiert das flüssige Sorptionsmittel den über den Dampfanschluss 4 zugeführten Kältemitteldampf. Es rieselt über die Wärmetauscherplatten 3 und gibt dabei die bei der Absorption des Kältemittels freiwerdende Wärme an die Wärmetauscherplatten 3 und damit letztlich, wie oben erwähnt, an das Heizkreiswasser ab. Das dabei entstehende kältemittelreiche Sorptionsmittel wird über den dritten Abfuhranschluss 2.3 aus der Strömungskanalgruppe 2 abgeführt.

Selbstverständlich sind, und diesbezüglich wird im Vorgriff auch bereits auf Figur 6 verwiesen, bei beiden Alternativen entsprechende Pumpen 11 zum Transport der Fluide vorgesehen.

Geometrisch etwas genauer betrachtet, ist insbesondere mit Verweis auf die Figuren 1 bis 5 weiterhin vorgesehen, dass der Berieselungsanschluss 5 sowohl oberhalb des ersten Zufuhranschlusses 1.1 als auch oberhalb des ersten Abfuhranschlusses 1.2 angeordnet ist. Auf diese Weise ist sichergestellt, dass das vom Berieselungsanschluss 5 einströmende zweite Fluid stets die gesamte Fläche der auch mit dem ersten Fluid in Kontakt stehenden Wärmetauscherplatten 3 überströmt und ein maximaler Wärmeaustausch zwischen den beiden Fluiden stattfinden kann.

Um einen Gegenstrom bezüglich des zweiten, vom Berieselungsanschluss 5 kommenden Fluids mit dem ersten Fluid zu realisieren, ist weiterhin vorgesehen, dass der erste Zufuhranschluss 1.1 für das erste Fluid unterhalb des ersten Abfuhranschlusses 1.2 für das zweite Fluid angeordnet ist. Außerdem ist die erste Strömungskanalgruppe 1 zwischen den ersten Zu- und Abfuhranschlüssen 1.1, 1.2 für das erste Fluid vertikal orientiert verlaufend angeordnet.

Um eine möglichst umbehinderte Strömung des zweiten Fluids, und zwar insbesondere wenn es verdampft ist, innerhalb der zweiten Strömungskanalgruppe 2 zu realisieren, sind ferner die Wärmetauscherplatten 3 zur internen Verbindung der zweiten Strömungskanalgruppe 2 mit mehreren Durchbrechungen 6 versehen. Wie in den Figuren 1 und 6 dargestellt, ist bei diesen beiden Ausführungsformen weiterhin bevorzugt vorgesehen, dass der Dampfanschluss 4 in Verlängerung einer Reihe von Durchbrechungen 6 an den Wärmetauscherplatten 3 angeordnet ist.

weiterhin sind zur Festlegung eines Abstandes zwischen den die zweite Strömungskanalgruppe 2 zwischen sich definierenden Wärmetauscherplatten 3 diese mit Prägungen 10 versehen. Diese Prägungen sind in durchbrechungsfreien Bereichen der Wärmetauscherplatten 3 angeordnet, und zwar einerseits direkt neben den Durchbrechungen 6, andererseits aber auch in dem Bereich zwischen dem ersten Zufuhranschluss 1.1 und dem ersten Abfuhranschluss 1.2.

In diesem Zusammenhang ist weiter bevorzugt vorgesehen, dass die erste, jeweils von zwei Wärmetauscherplatten 3 begrenzte Strömungskanalgruppe 1 an der einen Wärmetauscherplatte 3 mit ihrer Spitze nach oben gerichteten und an der anderen Wärmetauscherplatte 3 mit ihrer Spitze nach unten gerichteten V-förmigen Wellenprägungen 7 versehen sind. Auf diese Weise ergibt sich eine gewellte Oberfläche, über die die beiden wärmetauschenden Fluide strömen müssen, was zu einer besonders guten Wärme- und Stoffübertragung führt. Dabei sind, wie sich aus den Figuren 1 bis 5 ergibt, beidseitig der V-förmigen Wellenprägungen 7 die genannten Durchbrechungen 6 zur internen Verbindung der zweiten Strömungskanalgruppe 2 angeordnet.

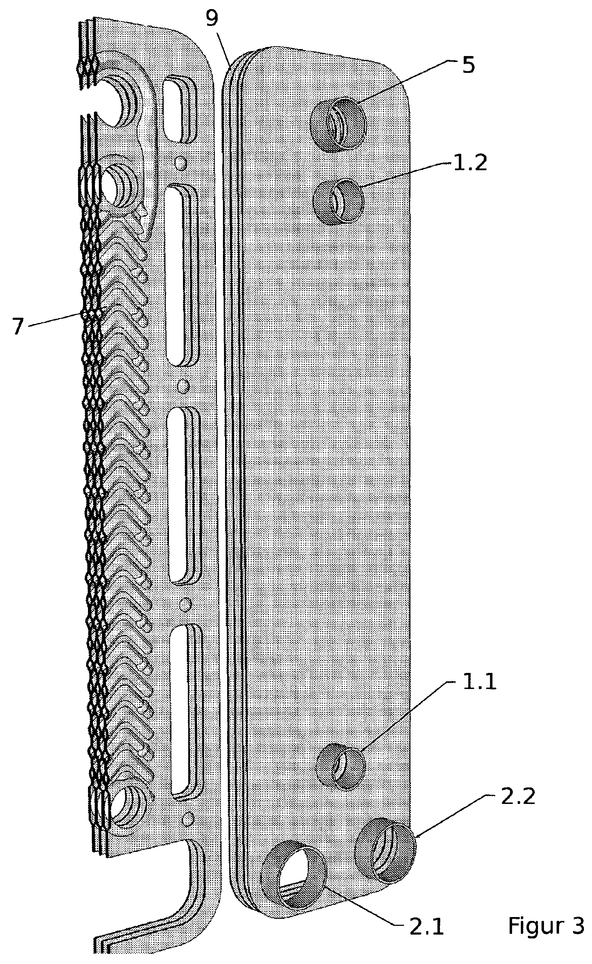

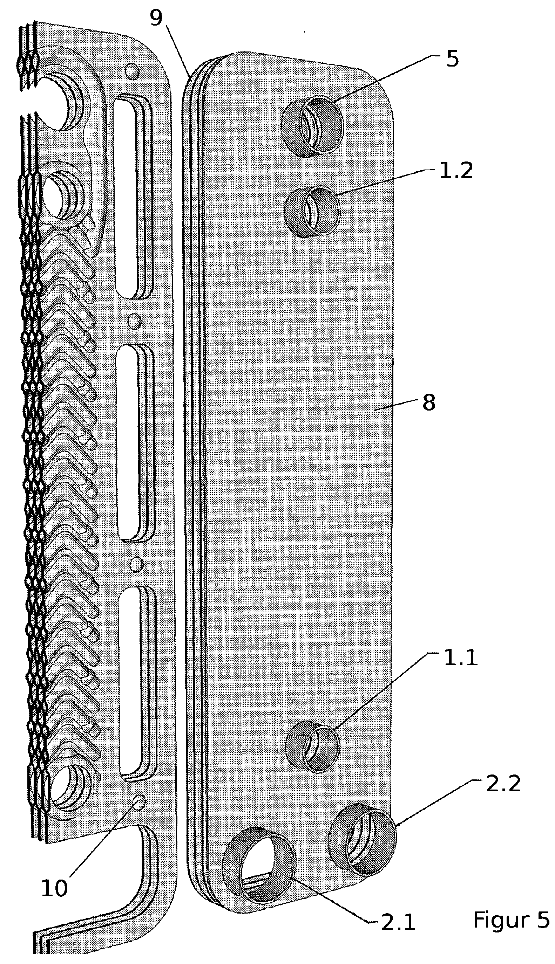

Wie aus den Figuren 3 und 5 ersichtlich, ist weiterhin in an sich bekannter Weise vorgesehen, dass beidseitig eines Stapels aus Wärmetauscherplatten 3 Abschlussplatten 8 angeordnet sind. An diesen Abschlussplatten 8 sind einerseits die Zu- und Abfuhranschlüsse 1.1, 1.2, 2.1, 2.2 für das erste und zweite Fluid angeordnet. Darüber hinaus sind an den Abschlussplatten 8 erfindungsgemäß aber auch der Dampfanschluss 4 (nicht extra dargestellt) und der Berieselungsanschluss 5 angeordnet.

Eine besonders bevorzugte Ausführungsform der erfindungsgemäßen Lösung ist in Figur 6 dargestellt, die aus einer Kombination von zwei Plattenwärmeübertragern besteht, wobei in diesem Fall erfindungsgemäß vorgesehen ist, dass der Dampfanschluss 4 des als Verdampfers ausgebildeten Plattenwärmeübertragers (links in Figur 6) zur Weiterleitung von Kältemitteldampf mit dem Dampfanschluss 4 des als Absorber ausbildeten Plattenwärmeübertragers (rechts in Figur 6) verbunden ausgebildet ist. Dabei sind der als Verdampfer ausgebildete Plattenwärmeübertrager und der als Absorber ausgebildete Plattenwärmeübertrager direkt hintereinander als (kompakte, quaderförmige) Stapeleinheit ausgebildet (nicht extra dargestellt).

Mit Bezug auf die beiden obigen Kurzzusammenfassungen zeichnet sich die in Figur 6 dargestellte Lösung somit dadurch aus, dass mit der Verdampfereinheit (links in Figur 6) Ammoniakdampf als absorbierbares Kältemittel erzeugt wird, dieser Dampf über den Dampfanschluss 4 der Absorbereinheit (rechts in Figur 6) zugeführt und dort mit dem Sorptionsmittel in Kontakt gebracht wird. Die in Figur 6 dargestellte, selbstverständlich noch weitere Komponenten aufweisende, aus Verdampfereinheit und Sorbereinheit bestehende, doppelte Plattenwärmeübertragereinheit baut sehr kompakt und gewährleistet eine sehr gute Wärme- und Stoffübertragung.

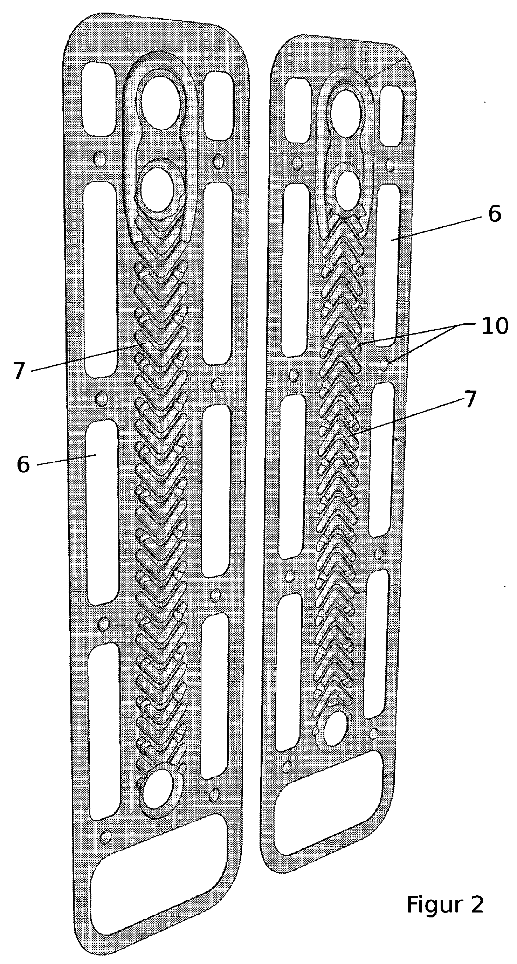

Je nach dem, ob eher ein in seiner Tiefenerstreckung schmaler oder ein in seiner Höhenerstreckung flacher Plattenwärmeübertrager benötigt wird, kommen wahlweise Lösungen gemäß der Figuren 2 und 3 bzw. 3 und 4 in Betracht.

### Bezugszeichenliste

- 1: Strömungskanalgruppe
- 1.1: erster Zufuhranschluss
- 1.2: erster Abfuhranschluss
- 2: Strömungskanalgruppe
- 2.1: zweiter Zufuhranschluss
- 2.2: zweiter Abfuhranschluss
- 2.3: dritter Abfuhranschluss
- 3: Wärmetauscherplatte
- 4: Dampfanschluss
- 5: Berieselungsanschluss
- 6: Durchbrechung
- 7: Wellenprägung
- 8: Abschlussplatte
- 9: Ränder
- 10: Prägung
- 11: Pumpe

## Patentansprüche

1. Plattenwärmeübertrager, umfassend eine Anzahl stapelartig angeordneter, miteinander verbundener und wellenförmig profilierter Wärmetauscherplatten (3), zwischen denen voneinander getrennte, parallel zueinander verlaufende erste und zweite Strömungskanalgruppen (1, 2) für ein erstes und ein zweites wärmetauschendes Fluid angeordnet sind, wobei für das erste Fluid ein erster Zufuhranschluss (1.1) zur ersten Strömungskanalgruppe (1) und ein erster Abfuhranschluss (1.2) von der ersten Strömungskanalgruppe (1) und für das zweite Fluid ein zweiter Zufuhranschluss (2.1) zur zweiten Strömungskanalgruppe (2) und ein zweiter Abfuhranschluss (2.2) von der zweiten Strömungskanalgruppe (2) vorgesehen ist,
**dadurch gekennzeichnet,**
**dass** die zweite Strömungskanalgruppe (2) mit einem Dampfanschluss (4) versehen und in die gleiche Strömungskanalgruppe (2) ein mit dem Abfuhranschluss (2.2) der gleichen Strömungskanalgruppe (2) verbundener Berieselungsanschluss (5) ausmündend ausgebildet ist.

2. Plattenwärmeübertrager nach Anspruch 1,
**dadurch gekennzeichnet,**
**dass** die zweite Strömungskanalgruppe (2) als Verdampfer zur Verdampfung des über den Berieselungsanschluss (5) zugeführten zweiten Fluids und der Dampfanschluss (4) zur Abfuhr des verdampften zweiten Fluids aus der zweiten Strömungskanalgruppe (2) ausgebildet ist.

3. Plattenwärmeübertrager nach Anspruch 2,
**dadurch gekennzeichnet,**
**dass** bei Ausbildung des Plattenwärmeübertragers als Verdampfer das erste Fluid eine mit Umgebungswärme erwärmte Sole und das zweite Fluid ein verdampfbares Kältemittel ist.

4. Plattenwärmeübertrager nach Anspruch 1,
**dadurch gekennzeichnet,**
**dass** der Dampfanschluss (4) zur Zufuhr eines dritten dampfförmigen Fluids zur zweiten Strömungskanalgruppe (2) und die zweite Strömungskanalgruppe (2) als Absorber zur Zusammenführung des über den Berieselungsanschluss (5) zugeführten zweiten Fluids mit dem dritten dampfförmigen Fluid ausgebildet ist.

5. Plattenwärmeübertrager nach Anspruch 4,
**dadurch gekennzeichnet,**
**dass** bei Ausbildung des Plattenwärmeübertragers als Absorber das erste Fluid Heizkreiswasser eines Gebäueheizkreislaufes und das zweite Fluid ein fluides Sorptionsmittel ist.

6. Plattenwärmeübertrager nach Anspruch 4 oder 5,
**dadurch gekennzeichnet,**
**dass** bei Ausbildung des Plattenwärmeübertragers als Absorber der Zufuhranschluss (2.1) zur Zufuhr von kältmittelarmen Sorptionsmittel ausgebildet ist.

7. Plattenwärmeübertrager nach einem der Ansprüche 4 bis 6, **dadurch gekennzeichnet,**
**dass** bei Ausbildung des Plattenwärmeübertragers als Absorber an der zweiten Strömungskanalgruppe (2) ein dritter Abfuhranschluss (2.3) zur Abfuhr eines kältemittelreichen Sorptionsmittels angeordnet ist.

8. Plattenwärmeübertrager nach einem der Ansprüche 1 bis 7,
**dadurch gekennzeichnet,**
**dass** der Berieselungsanschluss (5) sowohl oberhalb des ersten Zufuhranschlusses (1.1) als auch oberhalb des ersten Abfuhranschlusses (1.2) angeordnet ist.

9. Plattenwärmeübertrager nach einem der Ansprüche 1 bis 8,
**dadurch gekennzeichnet,**
**dass** der erste Zufuhranschluss (1.1) unterhalb des ersten Abfuhranschlusses (1.2) angeordnet ist.

10. Plattenwärmeübertrager nach einem der Ansprüche 1 bis 9,
**dadurch gekennzeichnet,**
**dass** die Wärmetauscherplatten (3) zur internen Verbindung der zweiten Strömungskanalgruppe (2) mit mehreren Durchbrechungen (6) versehen sind.

11. Plattenwärmeübertrager nach einem der Ansprüche 1 bis 10,
**dadurch gekennzeichnet,**
**dass** die erste Strömungskanalgruppe (1) zwischen den ersten Zu- und Abfuhranschlüssen (1.1, 1.2) vertikal orientiert verlaufend angeordnet ist.

12. Plattenwärmeübertrager nach einem der Ansprüche 1 bis 11,
**dadurch gekennzeichnet,**
**dass** die erste, jeweils von zwei Wärmetauscherplatten (3) begrenzte Strömungskanalgruppe (1) an der einen Wärmetauscherplatte (3) mit ihrer Spitze nach oben gerichteten und an der anderen Wärmetauscherplatte (3) mit ihrer Spitze nach unten gerichteten V-förmigen Wellenprägungen (7) versehen sind.

13. Plattenwärmeübertrager nach einem der Ansprüche 1 bis 12,
**dadurch gekennzeichnet,**
**dass** beidseitig eines Stapels aus Wärmetauscherplatten (3) Abschlussplatten (8) angeordnet sind.

14. Plattenwärmeübertrager nach Anspruch 13,
**dadurch gekennzeichnet,**
**dass** an den Abschlussplatten (8) der Dampfanschluss (4) und der Berieselungsanschluss (5) angeordnet sind.

15. Kombination aus zwei Plattenwärmeübertragern nach Anspruch 2 und 4,
**dadurch gekennzeichnet,**
**dass** der Dampfanschluss (4) des als Verdampfers ausgebildeten Plattenwärmeübertragers zur Weiterleitung von Kältemitteldampf mit dem Dampfanschluss (4) des als Absorber ausbildeten Plattenwärmeübertragers verbunden ausgebildet ist.

## Claims

1. A plate-type heat exchanger, comprising a number of heat exchanger plates (3), arranged in a stack-like manner, connected with one another and profiled in an undulating manner, between which first and second flow channel groups (1, 2), separated from one another, running parallel to one another, for a first and a second heat exchanging fluid are arranged, wherein for the first fluid a first feed connection (1.1) for the first flow channel group (1) and a first removal connection (1.2) from the first flow channel group (1) and for the second fluid a second feed connection (2.1) to the second flow channel group (2) and a second removal connection (2.2) from the second flow channel group (2) is provided,
**characterized in that**
the second flow channel group (2) is provided with a vapour connection (4) and a sprinkling connection (5), connected with the removal connection (2.2) of the same flow channel group (2), is constructed opening into the same flow channel group (2).

2. The plate-type heat exchanger according to Claim 1,
**characterized in that**
the second flow channel group (2) is constructed as a vaporizer for the vaporization of the second fluid, delivered via the sprinkling connection (5), and the vapour connection (4) is constructed for the removal of the vaporized second fluid from the second flow channel group (2).

3. The plate-type heat exchanger according to Claim 2,
**characterized in that**
with the construction of the plate-type heat exchanger as a vaporizer, the first fluid is a brine heated with ambient heat and the second fluid is a vaporizable cooling agent.

4. The plate-type heat exchanger according to Claim 1,
**characterized in that**
the vapour connection (4) is constructed for the feeding of a third vaporous fluid to the second flow channel group (2) and the second flow channel group (2) is constructed as absorber for the combining of the second fluid, delivered via the sprinkling connection (5), with the third vaporous fluid.

5. The plate-type heat exchanger according to Claim 4,
**characterized in that**
with construction of the plate-type heat exchanger as an absorber, the first fluid is heating circuit water of a heating circuit of a building and the second fluid is a fluid sorbent.

6. The plate-type heat exchanger according to Claim 4 or 5,
**characterized in that**
with construction of the plate-type heat exchanger as an absorber, the feed connection (2.1) is constructed for the feeding of sorbent which is low in cooling agent.

7. The plate-type heat exchanger according to one of Claims 4 to 6,
**characterized in that**
with construction of the plate-type heat exchanger as an absorber, on the second flow channel group (2) a third removal connection (2.3) is arranged for the removal of a sorbent which is rich in cooling agent.

8. The plate-type heat exchanger according to one of Claims 1 to 7,
**characterized in that**
the sprinkling connection (5) is arranged both above the first feed connection (1.1) and also above the first removal connection (1.2).

9. The plate-type heat exchanger according to one of Claims 1 to 8,
**characterized in that**
the first feed connection (1.1) is arranged beneath the first removal connection (1.2).

10. The plate-type heat exchanger according to one of Claims 1 to 9,
**characterized in that**
the heat exchanger plates (3) for the internal connection of the second flow channel group (2) are provided with several openings (6).

11. The plate-type heat exchanger according to one of Claims 1 to 10,
**characterized in that**
the first flow channel group (1) is arranged running oriented vertically between the first feed- and removal connections (1.1, 1.2).

12. The plate-type heat exchanger according to one of Claims 1 to 11,
**characterized in that**
the first flow channel group (1), delimited respectively by two heat exchanger plates (3) is provided on the one heat exchanger plate (3) with V-shaped undulating embossings (7) with their point directed upwards and on the other heat exchanger plate (3) with their point directed downwards.

13. The plate-type heat exchanger according to one of Claims 1 to 12,
**characterized in that**
end plates (8) are arranged on both sides of a stack of heat exchanger plates (3).

14. The plate-type heat exchanger according to Claim 13,
**characterized in that**
the vapour connection (4) and the sprinkling connection (5) are arranged on the end plates (8).

15. A combination of two plate-type heat exchangers according to Claim 2 and 4,
**characterized in that**
the vapour connection (4) of the plate-type heat exchanger, constructed as a vaporizer, for passing on cooling agent vapour, is constructed connected with the vapour connection (4) of the plate-type heat exchanger which is constructed as an absorber.

## Revendications

1. Échangeur thermique à plaques, comprenant une pluralité de plaques d'échangeur thermique (3) empilées, reliées les unes aux autres et profilées de forme ondulée, entre lesquelles des premiers et deuxièmes groupe de canaux d'écoulement (1,2) séparés les uns des autres, s'étendant parallèlement les uns aux autres pour un premier et un deuxième fluide échangeur de chaleur sont disposés, dans lequel pour le premier fluide un premier raccord d'alimentation (1.1) vers le premier groupe de canaux d'alimentation (1) et un premier raccord d'évacuation (1.2) à partir du premier groupe de canaux d'écoulement (1) et pour le deuxième fluide un deuxième raccord d'alimentation (2.1) vers le deuxième groupe de canaux d'alimentation (2) et un deuxième raccord d'évacuation (2.2) à partir du deuxième groupe de canaux d'écoulement (2) est prévu,
**caractérisé en ce que**
le deuxième groupe de canaux d'écoulement (2) est pourvu d'un raccord de vapeur (4) et dans le même groupe de canaux d'écoulement (2) débouche un raccord d'arrosage (5) relié au raccord d'évacuation (2.2) du même groupe de canaux d'écoulement (2).

2. Échangeur thermique à plaques selon la revendication 1,
**caractérisé en ce que**
le deuxième groupe de canaux d'écoulement (2) est conçu comme un évaporateur pour évaporer le deuxième fluide alimenté via le raccord d'arrosage (5) et le raccord de vapeur (4) est conçu pour évacuer le deuxième fluide évaporé hors du deuxième groupe de canaux d'écoulement (2).

3. Échangeur thermique à plaques selon la revendication 2,
**caractérisé en ce que**
dans le cadre de la conception de l'échangeur thermique à plaques comme évaporateur le premier fluide est une saumure chauffée par la chaleur ambiante et le deuxième fluide est un milieu de refroidissement évaporable.

4. Échangeur thermique à plaques selon la revendication 1,
**caractérisé en ce que**
le rapport de vapeur (4) est conçu pour alimenter un troisième fluide à l'état vapeur dans le deuxième groupe de canaux d'écoulement (2) et le deuxième groupe de canaux d'écoulement (2) est conçu comme absorbeur pour regrouper le deuxième fluide alimenté via le raccord d'arrosage (5) avec le troisième fluide à l'état vapeur.

5. Échangeur thermique à plaques selon la revendication 4,
**caractérisé en ce que**
dans le cadre de la conception de l'échangeur thermique à plaques comme absorbeur le premier fluide est de l'eau de circuit de chauffage d'un circuit de chauffage d'immeuble et le deuxième fluide est un sorbant fluide.

6. Échangeur thermique à plaques selon la revendication 4 ou 5,
**caractérisé en ce que**
dans le cadre de la conception de l'échangeur thermique à plaques comme absorbeur le raccord d'alimentation (2.1) est conçu pour alimenter un sorbant pauvre en milieu de refroidissement.

7. Échangeur thermique à plaques selon une des revendications 4 à 6,
**caractérisé en ce que**
dans le cadre de la conception de l'échangeur thermique à plaques comme absorbeur sur le deuxième groupe de canaux d'écoulement (2) est disposé un troisième raccord d'évacuation (2.3) pour évacuer un sorbant riche en milieu de refroidissement.

8. Échangeur thermique à plaques selon une des revendications 1 à 7,
**caractérisé en ce que**
le raccord d'arrosage (5) est disposé tant au-dessus du premier raccord d'alimentation (1.1) au-dessus du premier raccord d'évacuation (1.2).

9. Échangeur thermique à plaques selon une des revendications 1 à 8,
**caractérisé en ce que**
le premier raccord d'alimentation (1.1) est disposé au-dessous du premier raccord d'évacuation (1.2).

10. Échangeur thermique à plaques selon une des revendications 1 à 9,
**caractérisé en ce que**
les plaques d'échangeur thermique (3) sont pourvues de plusieurs percées (6) en vue de la liaison interne au deuxième groupe de canaux d'écoulement (2).

11. Échangeur thermique à plaques selon une des revendications 1 à 10,
**caractérisé en ce que**
le premier groupe de canaux d'écoulement (1) est disposé en orientation verticale entre les premiers raccords d'alimentation et d'évacuation (1.1, 1.2).

12. Échangeur thermique à plaques selon une des revendications 1 à 11,
**caractérisé en ce que**
le premier groupe de canaux d'écoulement (1) délimité respectivement par deux plaques d'échangeur thermique (3) est pourvu sur une plaque d'échangeur thermique (3) d'ondulations en forme de V (7) à pointe orientée vers le haut est sur l'autre plaque d'échangeur thermique (3) d'ondulations en forme de V à pointe orientée vers le bas.

13. Échangeur thermique à plaques selon une des revendications 1 à 12,
**caractérisé en ce que**
des deux côtés d'une pile de plaques d'échangeur thermique (3) des plaques d'obturation (8) sont disposées.

14. Échangeur thermique à plaques selon la revendication 13,
**caractérisé en ce que**
sur les plaques d'obturation (8) sont disposés le raccord de vapeur (4) et le raccord d'arrosage (5).

15. Combinaison de deux échangeurs thermiques à plaques selon la revendication 2 et 4,
**caractérisé en ce que**
le raccord de vapeur (4) de l'échangeur thermique à plaques conçu comme évaporateur est conçu pour transférer la vapeur de milieu de refroidissement en liaison avec le raccord de vapeur (4) de l'émetteur thermique à plaques conçu comme absorbeur.
